(19) Europäisches Patentamt
European Patent Office
Office européen des brevets

(11) EP 4 800 040 A1

(12) **EUROPEAN PATENT APPLICATION**
published in accordance with Art. 153(4) EPC

(43) Date of publication:
**02.09.2026 Bulletin 2026/36**

(21) Application number: **24882336.1**

(22) Date of filing: **21.10.2024**

(51) International Patent Classification (IPC):
***C08F 2/24*** *(2006.01)* ***C08F 214/18*** *(2006.01)*

(52) Cooperative Patent Classification (CPC):
**C08F 2/16; C08F 2/26; C08F 14/18; C08F 214/18**

(86) International application number:
**PCT/JP2024/037373**

(87) International publication number:
**WO 2025/089223 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.10.2023 JP 2023181599**

(71) Applicant: **AGC INC.**
**Chiyoda-ku**
**Tokyo 100-8405 (JP)**

(72) Inventors:
- **MATSUMOTO, Mariko**
**Tokyo 100-8405 (JP)**
- **SHIBASAKI, Kosuke**
**Tokyo 100-8405 (JP)**
- **ABE, Kaori**
**Tokyo 100-8405 (JP)**
- **OTSUGU, Satoshi**
**Tokyo 100-8405 (JP)**
- **TAGUCHI, Daisuke**
**Tokyo 100-8405 (JP)**

(74) Representative: **Müller-Boré & Partner Patentanwälte PartG mbB**
**Friedenheimer Brücke 21**
**80639 München (DE)**

# (54) METHOD FOR PRODUCING FLUORINATED POLYMER

(57) Provided is a method for producing a fluorinated polymer with suppressed generation of hydrophilic group-containing by-products.

The method for producing a fluorinated polymer according to the present invention includes polymerizing a monomer including a fluorine-containing monomer with the use of a polymerization initiator X, in an aqueous dispersion containing a hydrocarbon-containing surfactant and an aqueous medium, to obtain a fluorinated polymer, wherein the polymerization initiator X contains no hydrophilic group and has a molecular weight of 200 or less.

EP 4 800 040 A1

## Description

TECHNICAL FIELD

The present invention relates to a method for producing a fluorinated polymer.

BACKGROUND ART

Fluorinated polymers such as tetrafluoroethylene-based copolymers have been used in various industrial fields, because of their excellent heat resistance, chemical resistance, flame retardancy, weather resistance and the like.

In the production of fluorinated polymers in the presence of aqueous media, fluorine-based surfactants are used in some cases, but the use of hydrocarbon-containing surfactants is being considered as a recent approach to reducing environmental impact. Further, hydrophilic group-containing polymerization initiators are used in the production of fluorinated polymers in the presence of aqueous media.

However, the use of hydrocarbon-containing surfactants and hydrophilic group-containing polymerization initiators in the production of fluorinated polymers results in generation of a large amount of hydrophilic group-containing by-products, which can be a new source of environmental impact.

To cope with this problem, Patent Document 1 discloses a method in which an ion exchange resin or synthetic adsorbent is used to reduce hydrophilic group-containing by-products.

PRIOR ART DOCUMENTS

PATENT DOCUMENTS

Patent Document 1: Japanese Patent No. 7236004

DISCLOSURE OF INVENTION

TECHNICAL PROBLEM

In the method disclosed in Patent Document 1, the generated hydrophilic group-containing by-products can be reduced with the use of the ion exchange resin or synthetic adsorbent. However, the method disclosed in Patent Document 1 cannot suppress generation itself of hydrophilic group-containing by-products. In particular, among the hydrophilic group-containing by-products, compounds represented by the later-described formula (S1) tend to be largely generated.

It is an object of the present invention to provide a method for producing a fluorinated polymer, with suppressed generation of hydrophilic group-containing by-products.

SOLUTION TO PROBLEM

As a result of extensive studies, the present inventors have found the following solutions to the above-described problem.

[1] A method for producing a fluorinated polymer, comprising polymerizing a monomer including a fluorine-containing monomer with the use of a polymerization initiator X, in an aqueous dispersion containing a hydrocarbon-containing surfactant and an aqueous medium, to obtain a fluorinated polymer,
wherein the polymerization initiator X contains no hydrophilic group and has a molecular weight of 200 or less.

[2] The method for producing a fluorinated polymer according to [1], wherein the polymerization initiator X is a compound represented by the formula (X):

$$R^1\text{-CO-O-O-}R^2 \qquad (X)$$

where $R^1$ and $R^2$ are each independently a $C_{1-5}$ alkyl group.

[3] The method for producing a fluorinated polymer according to [1] or [2], wherein the fluorine-containing monomer includes tetrafluoroethylene.

[4] The method for producing a fluorinated polymer according to any one of [1] to [3], wherein the hydrocarbon-containing surfactant includes at least one type selected from the group consisting of an anionic hydrocarbon surfactant and a nonionic hydrocarbon surfactant.

[5] An aqueous dispersion comprising: a fluorinated polymer having, at a terminal end of a molecular chain thereof, a

group represented by the formula (Y); and an aqueous medium,
wherein the fluorinated polymer is a polytetrafluoroethylene,

$$R^1\text{-}(O)_n\text{-} \qquad (Y)$$

where $R^1$ is a $C_{1-4}$ alkyl group; and n is 0 or 1.
[6] The aqueous dispersion according to [5], wherein $R^1$ in the formula (Y) is a tert-butyl group.
[7] The aqueous dispersion according to [5] or [6], further comprising a hydrocarbon-containing surfactant.
[8] The aqueous dispersion according to [7], wherein the hydrocarbon-containing surfactant includes at least one type selected from the group consisting of an anionic hydrocarbon surfactant and a nonionic hydrocarbon surfactant.
[9] A solid composition comprising a fluorinated polymer having, at a terminal end of a molecular chain thereof, a group represented by the formula (Y),
wherein the fluorinated polymer is a polytetrafluoroethylene,

$$R^1\text{-}(O)_n\text{-} \qquad (Y)$$

where $R^1$ is a $C_{1-4}$ alkyl group; and n is 0 or 1.
[10] The solid composition according to [9], wherein $R^1$ in the formula (Y) is a tert-butyl group.
[11] The solid composition according to [9] or [10], further comprising a hydrocarbon-containing surfactant.
[12] The solid composition according to [11], wherein the hydrocarbon-containing surfactant includes at least one type selected from the group consisting of an anionic hydrocarbon surfactant and a nonionic hydrocarbon surfactant.

## ADVANTAGEOUS EFFECTS OF INVENTION

According to the present invention, it is possible to provide a method for producing a fluorinated polymer, with suppressed generation of hydrophilic group-containing by-products.

## DESCRIPTION OF EMBODIMENTS

The meanings of terms in the present specification are as follows.

In the present specification, a numerical range expressed using "to" means a range including numerical values described before and after "to" as the lower and upper limit values. In numerical ranges stepwisely described in the present specification, the upper or lower limit value of a certain numerical range may be replaced by the upper or lower limit value of any other one of the stepwisely described numerical ranges. In numerical ranges described in the present specification, the upper or lower limit value of a certain numerical range may be replaced by a numerical value in Examples.

In the present specification, each component may be one type of corresponding substance alone or a combination of two or more types of corresponding substances. In the case where a plurality of substances are used in combination as one component, the content of such one component means the total content of the plurality of substances used in combination unless otherwise specified.

In the present specification, a combination of two or more preferred embodiments is a more preferred embodiment. In the present specification, a "unit" is a generic term for an atomic group derived from one molecule of monomer, which is formed directly by polymerization of the monomer, and an atomic group obtained by chemical conversion of a part of the aforementioned atomic group. A "unit based on a monomer" is hereinafter also simply referred to as a "unit".

The contents (mass% or mol%) of the respective types of units to all the units in a polymer is determined by analyzing the polymer by nuclear magnetic resonance (NMR) spectroscopy. Normally, the contents of each type of units as calculated from the amount of each corresponding monomer charged is substantially consistent with the actual content of that type of units.

### [Method for producing fluorinated polymer]

A method for producing a fluorinated polymer according to the present invention (hereinafter also referred to as the "present production method") includes polymerizing a monomer (hereinafter also referred to as a "specific monomer") including a fluorine-containing monomer with the use of a polymerization initiator X, in an aqueous dispersion containing a hydrocarbon-containing surfactant and an aqueous medium, to obtain a fluorinated polymer (hereinafter also referred to as a "second fluorinated polymer"), wherein the polymerization initiator X contains no hydrophilic group and has a molecular weight of 200 or less.

In the present production method, the generation of by-products containing hydrophilic groups is suppressed. The detailed reason for this is not clear, but is estimated as follows.

It is considered that, when a hydrophilic group-containing polymerization initiator as described in Patent Document 1 is used in the production of a fluorinated polymer, groups derived from the hydrophilic group-containing polymerization initiator are added to terminal ends of oligomers derived from the fluorine-containing monomer, thereby generating hydrophilic group-containing by-products.

In the present production method, by contrast, it is considered that the generation of hydrophilic group-containing by-products is suppressed due to the presence of no hydrophilic group in the polymerization initiator X. It is further considered that, since the polymerization initiator X is adjusted to a specific molecular weight, the fluorine-containing monomer is sufficiently polymerized in the aqueous dispersion.

<Aqueous dispersion>

In the present production method, used is the aqueous dispersion containing a hydrocarbon-containing surfactant and an aqueous medium.

(Hydrocarbon-containing surfactant)

The hydrocarbon-containing surfactant is a surfactant containing a hydrocarbon group.

To be more specific, the hydrocarbon-containing surfactant is preferably of the type in which at least one of substituents on carbon atoms constituting the hydrocarbon group is a hydrogen atom. The substituents on the carbon atoms may include a chlorine atom, a bromine atom or an iodine atom. Further, a methylene part in the hydrocarbon group may be substituted with -O- or -CO-.

The proportion of substitution of hydrogen atoms to the substituents on the carbon atoms in the hydrocarbon-containing surfactant (as given by 100 $\times$ the total number of hydrogen atoms / the total number of substituents on all the carbon atoms) is preferably 75% or higher, more preferably 85% or higher, still more preferably 95% or higher. The upper limit of the proportion of hydrogen substituents is preferably 99% or lower.

In view of the stability of the fluorinated polymer, the hydrocarbon-containing surfactant preferably includes at least one type selected from the group consisting of an anionic hydrocarbon surfactant and a nonionic hydrocarbon surfactant, and more preferably consists of at least one type selected from the group consisting of an anionic hydrocarbon surfactant and a nonionic hydrocarbon surfactant.

The anionic hydrocarbon surfactant is a surfactant having: a negatively charged hydrophilic moiety with an anionic functional group; and a hydrophobic moiety with a hydrocarbon group such as an alkyl group or the like.

Specifically, the anionic functional group can be, for example, a carboxylate group ($-COO^-$), a sulfonate group ($-SO_3^-$), a sulfate group ($-SO_4^{2-}$), a phosphoryl group ($-PO_3^{2-}$) or a phosphate group ($-PO_4^{3-}$).

Specific examples of the anionic hydrocarbon surfactant include branched $C_{10}$ tertiary carboxylic acid (Versatic (registered trademark) 10, manufactured by Resolution Performance Products), sodium linear alkyl polyether sulfonate (Avanel (registered trademark) S series, manufactured by BASF), sodium dodecyl sulfate (sodium lauryl sulfate) and sulfosuccinate surfactant (Lankropol (registered trademark) K8300, manufactured by Akzo Nobel Surface Chemistry LLC.).

The nonionic hydrocarbon surfactant is a hydrocarbon surfactant with no ionic functional group. As the ionic functional group, an anionic functional group as described above and a cationic functional group such as quaternary ammonium cation may be mentioned.

The nonionic hydrocarbon surfactant preferably has a hydrophobic moiety with a long-chain hydrocarbon group and a hydrophilic moiety with a polyoxyalkylene chain.

Examples of the nonionic hydrocarbon surfactant include various types of polyalkylene oxide block copolymers such as polyethylene oxide-polypropylene oxide block copolymer.

As examples of the nonionic hydrocarbon surfactant, surfactants disclosed in paragraphs [0043] to [0052] of JP-A-2016-537499 may also be mentioned.

The content of the hydrocarbon-containing surfactant to the total mass of the aqueous dispersion, before the start of the polymerization of the monomer (specific monomer) for production of the second fluorinated polymer, is preferably 0.00001 to 10 mass%, more preferably 0.0001 to 1 mass%.

In the present specification, "before the start of the polymerization of the monomer for production of the second fluorinated polymer" means immediately before a starting point of the polymerization. Here, a "starting point of polymerization" can be a point at which a monomer and a polymerization initiator come into coexistence in a reactor after the inside of the reactor is controlled to a polymerization temperature or higher or a point at which the inside of a reactor is controlled to a polymerization temperature or higher after a monomer and a polymerization come into coexistence in the reactor.

(Aqueous medium)

The aqueous dispersion contains an aqueous medium.

In the case where the aqueous dispersion includes a first fluorinated polymer as described later, the aqueous medium contained in the aqueous dispersion may be a polymerization solvent used for production of the first fluorinated polymer.

As the aqueous medium in the aqueous dispersion, water and a mixed solvent of water and a water-soluble organic solvent may be mentioned. Specific examples of the water-soluble organic solvent include tert-butanol, propylene glycol, dipropylene glycol, dipropylene glycol monomethyl ether and tripropylene glycol.

The content of the aqueous medium to the total mass of the aqueous dispersion, before the start of the polymerization of the monomer for production of the second fluorinated polymer, is preferably 60 to 99.9 mass%, more preferably 96 to 99.9 mass%, still more preferably 98 to 99.9 mass%.

(First fluorinated polymer)

The aqueous dispersion may contain a first fluorinated polymer.

The first fluorinated polymer is a polymer having a hydrophilic group and a hydrophobic moiety. The hydrophilic group of the first fluorinated polymer is mainly derived from a residue of the later-described water-soluble initiator present at a terminal end of the polymer or from a side chain structure of the polymer. The hydrophobic moiety of the first fluorinated polymer is derived from units formed by polymerization of the later-described fluorine-containing monomer. It is considered that the first fluorinated polymer allows, when the specific monomer is polymerized in the presence of the first fluorinated polymer, the specific monomer to be adsorbed and incorporated in the hydrophobic moiety and thereby solubilizes the specific monomer so that the specific monomer is polymerized in particles of the first fluorinated polymer with the addition of the polymerization initiator X. It is further considered that the first fluorinated polymer contributes to stable dispersion of the respective components in the aqueous medium.

The first fluorinated polymer is preferably a polymer different from the second fluorinated polymer.

The first fluorinated polymer is a polymer containing fluorine atoms.

The first fluorinated polymer preferably has units (hereinafter also referred to as "TFE units") based on tetrafluoroethylene (hereinafter also referred to as "TFE"). More preferably, the first fluorinated polymer has TFE units and units (hereinafter also referred to as "PAVE units") based on a perfluoro(alkyl vinyl ether) (hereinafter also referred to as "PAVE").

The PAVE is preferably a monomer represented by the formula (1) with a view to achieving high polymerization reactivity during production of the first fluorinated polymer and enabling more efficient production of the second fluorinated polymer.

$$CF_2{=}CF\text{-}O\text{-}R^{f1} \qquad (1)$$

In the formula (1), $R^{f1}$ is a $C_{1\text{-}10}$ perfluoroalkyl group.

With a view to achieving higher polymerization reactivity, the carbon number of $R^{f1}$ is preferably 1 to 8, more preferably 1 to 6, still more preferably 1 to 5, particularly preferably 1 to 3.

The perfluoroalkyl group may be linear or branched.

Specific examples of the PAVE include perfluoro(methyl vinyl ether) (hereinafter also referred to as "PMVE"), perfluoro(ethyl vinyl ether) (hereinafter also referred to as "PEVE") and perfluoro(propyl vinyl ether) (hereinafter also referred to as "PPVE"). With a view to enabling more efficient production of the second fluorinated polymer, PMVE or PPVE is preferred, and PMVE is more preferred.

In the case where the first fluorinated polymer has TFE units and PAVE units, the content of PAVE units to the total content of TEF units and PAVE units in the first fluorinated polymer is 20 to 60 mol%, more preferably 25 to 60 mol%, still more preferably 30 to 55 mol%.

In the case where the first fluorinated polymer has TFE units and PAVE units, the total content of TEF units and PAVE units to all the units in the first fluorinated polymer is preferably 90 to 100 mol%, more preferably 95 to 100 mol%, still more preferably 99 to 100 mol%.

The first fluorinated polymer may have units based on a monomer other than TFE and PAVE.

The other monomer is preferably hexafluoropropylene.

With a view to enabling more efficient production of the second fluorinated polymer, it is preferable that the first fluorinated polymer has substantially no units based on the other monomer.

Here, "substantially no units based on the other monomer" means that the content of units based on the other monomer to all the units in the first fluorinated polymer is 0.01 mol% or less. The content of units based on the other monomer is preferably 0 mol%.

The first fluorinated polymer is preferably a polymer consisting of TFE units and PAVE units. In this case, the proportion of TFE units and PAVE units in the first fluorinated polymer, as expressed by TFE units/PAVE units, is preferably 80.0 to 40.0 mol%/20.0 to 60.0 mol%, more preferably 75.0 to 40.0 mol%/25.0 to 60.0 mol%, still more preferably 70.0 to 45.0 mol%/30.0 to 55.0 mol%.

The content of the first fluorinated polymer to the total mass of the aqueous medium in the aqueous dispersion, before the start of the polymerization of the monomer (specific monomer) for production of the second fluorinated polymer, is preferably 0.01 to 4.0 mass%. With a view to enabling more efficient production of the second fluorinated polymer, the content of the first fluorinated polymer is more preferably 0.01 to 0.6 mass%, still more preferably 0.01 to 0.5 mass%.

The first fluorinated polymer is preferably dispersed in the form of particles in the aqueous medium.

The average particle size of the first fluorinated polymer is preferably 1 to 150 nm, more preferably 10 to 120 nm, still more preferably 50 to 120 nm, with a view to enabling more efficient production of the second fluorinated polymer.

The average particle size of the first fluorinated polymer refers to a particle size (D50) at a point where the cumulative volume is 50% on a cumulative curve obtained by measuring the particle size distribution of the polymer by the laser diffraction/scattering method and taking the total volume of the group of the particles as 100%.

A preferable method for producing first fluorinated polymer includes polymerizing a monomer (preferably, a mixture of monomers including TFE and PAVE) in an aqueous medium in the presence of a polymerization initiator. By this method, the first fluorinated polymer is obtained in the form of particles dispersed in the aqueous medium.

The above-described aqueous dispersion may be provided by adding the hydrocarbon-containing surfactant to the aqueous medium with the particles of the first fluorinated polymer dispersed therein. The above-described aqueous dispersion may be provided by adding a different aqueous medium and the hydrocarbon-containing surfactant to the aqueous medium with the particles of the first fluorinated polymer dispersed therein. The aqueous-described aqueous dispersion may be provided by performing solvent replacement on the aqueous medium to obtain a dispersion of the first fluorinated polymer in a different aqueous medium, followed by adding thereto the hydrocarbon-containing surfactant.

The polymerization initiator used for production of the first fluorinated polymer is preferably a water-soluble polymerization initiator. Here, the water-soluble polymerization initiator refers to a polymerization initiator capable of being dissolved in an amount of 1 g or more in 100 g of water at 20°C. The water-soluble polymerization initiator is more preferably a persulfate or an organic polymerization initiator, still more preferably a persulfate.

Specific examples of the persulfate include ammonium persulfate, sodium persulfate and potassium persulfate. Preferred is ammonium persulfate.

Specific examples of the organic polymerization initiator include succinic peroxide and azobis(isobutylamidine) dihydrochloride.

The aqueous medium used for production of the first fluorinated polymer is the same as the specific examples of the aqueous medium used for production of the second fluorinated polymer as described above.

The method for producing the first fluorinated polymer preferably includes, after obtaining the aqueous medium in which the first fluorinated polymer is dispersed, heating the obtained aqueous medium. This heating step causes deactivation of the polymerization initiator present in the system so that the production of the second fluorinated polymer is less susceptible to influence by the polymerization initiator used for production of the first fluorinated polymer. As a result, the second fluorinated polymer with a high molecular weight can be easily obtained.

The heating temperature during the heating step is preferably 70 to 100°C, more preferably 80 to 98°C, still more preferably 85 to 95°C, with a view to further promoting deactivation of the polymerization initiator in the aqueous medium.

(Additional component)

The aqueous dispersion may contain a component (hereinafter also referred to as an "additional component") other than the above-described components.

Examples of the additional component include a chain transfer agent, a pH adjuster and a wax.

Specific examples of the chain transfer agent include ethyl acetate, methanol, ethanol, t-butyl methyl ether, diethyl ether, n-pentane, cyclohexane, methane and propane.

The pH adjuster can be, for example, an inorganic salt.

Specific examples of the inorganic salt include: phosphates such as disodium hydrogen phosphate and sodium dihydrogen phosphate; and carbonates such as sodium hydrogen carbonate and sodium carbonate. Among the phosphates, disodium hydrogen phosphate dihydrate or disodium hydrogen phosphate dodecahydrate is preferred.

Specific examples of the wax include Paraffin Wax-155 and Paraffin Wax-150 (both manufactured by Nippon Seiro Co., Ltd.).

In the case where the aqueous dispersion contains a chain transfer agent, the content of the chain transfer agent is preferably 0.1 to 5 parts by mass per 100 parts by mass of the aqueous medium. Further, the amount of the chain transfer agent used is preferably 0.1 to 20 parts by mass, more preferably 0.1 to 15 parts by mass, still more preferably 0.1 to 10 parts by mass, taking the amount of the specific monomer used as 100 parts by mass.

In the case where the aqueous dispersion contains a pH adjuster, the content of the pH adjuster is preferably 0.01 to 3.0 parts by mass per 100 parts by mass of the aqueous medium.

In the case where the aqueous dispersion contains a wax, the content of the wax is preferably 1 to 10 parts by mass per 100 parts by mass of the aqueous medium.

The concentration of fluoride ions to the total mass of the aqueous dispersion, before the start of the polymerization of the monomer for production of the second fluorinated polymer, is preferably 100 mass ppm or lower, more preferably 50 mass ppm or lower, in view of the polymerization stability. The lower limit of the concentration of fluoride ions may be 0 mass ppm.

The concentration of fluoride ions can be controlled to the above value by, for example, removing fluoride ions with the use of an anion exchange resin during production of the first fluorinated polymer.

Here, fluoride ions may be formed by reaction of the polymerization initiator (e.g. ammonium persulfate) and the monomer used for production of the first fluorinated polymer and be contained in the aqueous dispersion.

The concentration of sulfate ions to the total mass of the aqueous medium in the aqueous dispersion, before the start of the polymerization of the monomer for production of the second fluorinated polymer, is preferably 10 mass ppm or lower, more preferably 5 mass ppm or lower, with a view to further suppressing generation of hydrophilic group-containing by-products. The lower limit of the concentration of sulfate ions may be 0 mass ppm.

The concentration of sulfate ions can be controlled to the above value by, for example, removing sulfate ions with the use of an anion exchange resin during production of the first fluorinated polymer.

Here, sulfate ions are derived from the polymerization initiator (in particular, ammonium persulfate) used for production of the first fluorinated polymer and may be contained in the aqueous dispersion with the first fluorinated polymer. By controlling the concentration of sulfate ions to be 10 mass ppm or lower (in particular, 5 mass ppm or lower), generation of hydrophilic group-containing by-products can be more suppressed.

The concentration of ammonium ions to the total mass of the aqueous medium in the aqueous dispersion, before the start of the polymerization of the monomer for production of the second fluorinated polymer, is preferably 20 mass ppm or lower, more preferably 10 mass ppm or lower, with a view to suppressing agglomeration of the second fluorinated polymer. The lower limit of the concentration of ammonium ions may be 0 mass ppm.

The concentration of ammonium ions can be controlled to the above value by, for example, removing ammonium ions with the use of a cation exchange resin during production of the first fluorinated polymer.

Here, ammonium ions are derived from e.g. the initiator (in particular, ammonium persulfate) used for production of the first fluorinated polymer and may be contained in the aqueous solution with the first fluorinated polymer. It is assumed that, by controlling the concentration of ammonium ions to be 20 mass ppm or lower, the production efficiency of the second fluorinated polymer is improved with decrease of the ionic strength in the aqueous medium.

The concentration of a water-soluble polymerization initiator to the total mass of the aqueous medium in the aqueous dispersion, before the start of the polymerization of the monomer for production of the second fluorinated polymer, is preferably 20 mass ppm or lower, more preferably 10 mass ppm or lower, with a view to obtaining the second fluorinated polymer with high heat resistance. The lower limit of the concentration of the water-soluble polymerization initiator may be 0 mass ppm.

The concentration of the water-soluble polymerization initiator can be controlled to the above value by, for example, removing the water-soluble polymerization initiator with the use of an anion exchange resin during production of the first fluorinated polymer, or deactivating the water-soluble polymerization initiator by the above-described step.

The water-soluble polymerization initiator may be, for example, a water-soluble polymerization initiator (in particular, ammonium persulfate) used for production of the first fluorinated polymer, and may be contained in the aqueous dispersion with the first fluorinated polymer. It is assumed that generation of hydrophilic group-containing by-products can be more suppressed by controlling the concentration of the water-soluble polymerization initiator to be 20 mass ppm or lower.

<Specific monomer>

In the present production method, the specific monomer is used. The specific monomer includes a fluorine-containing monomer.

Examples of the fluorine-containing monomer include TFE, hexafluoropropylene (hereinafter also referred to as "HFP"), vinylidene fluoride (hereinafter also referred to as "VdF"), a fluoroalkylethylene (hereinafter also referred to as "FAE") and PAVE. The fluorine-containing monomer may be a combination of two or more types.

Specific examples of the FAE include $CH_2=CH(CF_2)_2F$, $CH_2=CH(CF_2)_3F$, $CH_2=CH(CF_2)_4F$ (hereinafter also referred to as "C4OLF"), $CH_2=CF(CF_2)_3H$ and $CH_2=CF(CF_2)_4H$. Preferred is C4OLF.

Examples and preferable embodiments of the PAVE are the same as those described above for the first fluorinated polymer.

Above all, the fluorine-containing monomer preferably includes TFE, and may more preferably be TFE.

The amount of the fluorine-containing monomer used is preferably 97 to 100 mass%, more preferably 98 to 100 mass%, still more preferably 99 to 100 mass%, relative to the amount of the specific monomer used. Even in the case where only TFE is used as the fluorine-containing monomer, the preferable amount of the fluorine-containing monomer used is the same as above.

It may also be preferable that the fluorine-containing monomer consists of TFE monomer and PPVE monomer. In this case, the proportion of TFE monomer to PPVE monomer, as expressed by TFE monomer/PPVE monomer, is preferably 99.9 to 90.0 mol%/0.1 to 10.0 mol%, more preferably 99.5 to 92.0 mol%/0.5 to 8.0 mol%, still more preferably 99.0 to 95.0 mol%/1.0 to 5.0 mol%.

Further, it may also be preferable that the fluorine-containing monomer consists of TFE monomer and HFP monomer. In this case, the proportion of TFE monomer to HFP monomer, as expressed by TFE monomer/HEP monomer, is preferably 99.9 to 85.0 mol%/0.1 to 15.0 mol%, more preferably 99.5 to 88.0 mol%/0.5 to 12.0 mol%, still more preferably 99.0 to 90.0 mol%/1.0 to 10.0 mol%.

The amount of the fluorine-containing monomer used relative to the amount of the specific monomer used may be 10.0 to 100.0 mol%. In this case, the amount of the fluorine-containing monomer used is preferably 30.0 to 70.0 mol%, more preferably 40.0 to 60.0 mol%.

Furthermore, the amount of the fluorine-containing monomer used may be 90.0 to 99.9 mol% relative to the amount of the specific monomer used. When importance is given to melt formability, the amount of the fluorine-containing monomer used is preferably 95.0 to 99.0 mol%.

The specific monomer may include a monomer (hereinafter also referred to as an "additional monomer") other than the above-described monomer.

Specific example of the additional monomer include ethylene (hereinafter also referred to as "E"), propylene, vinyl chloride and vinylidene chloride. Preferred is ethylene. The additional monomer may be a combination of two or more types.

The amount of the additional monomer used is preferably 10.0 to 70.0 mol%, more preferably 20.0 to 60.0 mol%, still more preferably 30.0 to 50.0 mol%, relative to the amount of the specific monomer used.

It may be preferable that the specific monomer consists of TFE monomer and E monomer. In this case, the proportion of TFE monomer to E monomer, as expressed by TFE monomer/E monomer, is preferably 90.0 to 30.0 mol%/10.0 to 70.0 mol%, more preferably 80.0 to 40.0 mol%/20.0 to 60.0 mol%, still more preferably 70.0 to 50.0 mol%/30.0 to 50.0 mol%.

On the other hand, it may also be preferable that the specific monomer includes no additional monomer.

The amount of the specific monomer used is preferably 1 to 50 parts by mass, more preferably 1 to 40 parts by mass, still more preferably 1 to 30 parts by mass, taking the amount of the aqueous medium contained in the aqueous dispersion as 100 parts by mass.

<Polymerization initiator X>

In the present production method, the polymerization initiator X is used.

The polymerization initiator X is a polymerization initiator containing no hydrophilic group and having a molecular weight of 200 or less.

As the hydrophilic group not contained in the polymerization initiator X, a hydroxyl group and an ionic functional group may be mentioned.

Specific examples of the ionic functional group are as described above.

The molecular weight of the polymerization initiator X is 200 or less, and is preferably 190 or less, more preferably 180 or less. The lower limit of the molecular weight is preferably 50 or more, more preferably 100 or more, still more preferably 150 or more.

The polymerization initiator X is preferably a compound represented by the formula (X).

$$R^1\text{-CO-O-O-}R^2 \qquad (X)$$

In the formula (X), $R^1$ and $R^2$ are each independently a $C_{1-5}$ alkyl group.

The alkyl group as $R^1$ and $R^2$ may be linear or branched, and are preferably branched.

The carbon number of the alkyl group as $R^1$ and $R^2$ is 1 to 5, and is preferably 2 to 5, more preferably 3 to 5, still more preferably 4 or 5, particularly preferably 4.

The alkyl group as $R^1$ and $R^2$ is preferably a methyl group, a propyl group, a butyl group or a dimethylpropyl group, more preferably a methyl group, an iso-propyl group, a tert-butyl group or a 1,1-dimethylpropyl group.

Specific examples of the polymerization initiator X include tert-butyl peroxypivalate (hereinafter also referred to as "PBPV"), tert-butyl peroxyisobutyrate (Luperox 80; tert-butyl perisobutyrate) and tert-butyl peroxyacetate (Luperox 7; tert-butyl peracetate). Preferred is PBPV. The polymerization initiator X may be a combination of two or more types.

The amount of the polymerization initiator X used is preferably 0.005 to 5 parts by mass, more preferably 0.01 to 3 parts by mass, still more preferably 0.01 to 2 parts by mass, taking the amount of the specific monomer used as 100 parts by mass.

<Other component>

In the present production method, a component other than the above components may be used during the polymerization of the specific monomer.

The other component can be, for example, a reducing agent.

The amount of the other component used is preferably 1 to 2000 ppm, taking the amount of the specific monomer used as 100 parts by mass.

<Process step>

The present production method includes polymerizing the specific monomer in the aqueous dispersion to obtain the second fluorinated polymer.

In the case where the first fluorinated polymer is contained in the aqueous dispersion, the first fluorinated polymer and the second fluorinated polymer may be copolymerized.

The second fluorinated polymer has units based on the fluorine-containing monomer, and is preferably a polymer having units based on TFE (hereinafter also referred to as "TFE units"), more preferably a homopolymer of TFE (polytetrafluoroethylene; hereinafter also referred to as "PTFE").

The content of the units based on the fluorine-containing monomer (in particular, TFE units) to all the units in the second fluorinated polymer is preferably 99.0 to 100.0 mass%, more preferably 99.5 to 100.0 mass%, still more preferably 99.9 to 100.0 mass%.

In the present production method, the respective components may be added all at once or may be added separately. The order of addition of the respective components is not particularly limited. For example, the aqueous dispersion containing the hydrocarbon-containing surfactant and the aqueous dispersion may be prepared, followed by adding the polymerization initiator X to the prepared aqueous dispersion; or the aqueous medium and the polymerization initiator X may be mixed together, followed by adding thereto the hydrocarbon-containing surfactant. Preferred is the order of addition of the respective components in Examples.

The specific monomer can be charged into the reaction system (polymerization reactor) by a common procedure. The specific monomer may be charged into the reaction system continuously or intermittently in such a manner as to adjust the polymerization pressure to a predetermined pressure; or the specific monomer may be charged in the form of a solution in an aqueous medium into the reaction system continuously or intermittently.

The polymerization initiator X may be added into the reaction system all at once or in several batches.

The polymerization temperature is preferably 10 to 95°C, more preferably 15 to 90°C.

The polymerization pressure is preferably 0.5 to 4.0 MPaG, more preferably 0.6 to 3.5 MPaG.

In the case of batch process, the polymerization time is preferably 90 to 1000 minutes, more preferably 90 to 700 minutes.

The polymerization of the specific monomer is preferably conducted in the presence of substantially no fluorine-based emulsifier (fluorine-based surfactant).

The presence of substantially no fluorine-based emulsifier means an environment in which the content of a fluorine-based emulsifier to the total mass of the aqueous medium in the aqueous dispersion is 0.03 mass ppm or less. The content of the fluorine-based emulsifier is preferably 0.02 mass ppm or less, more preferably 0 mass ppm.

The fluorine-based emulsifier refers to an emulsifier having hydrophilic and hydrophobic moieties, with a fluorine atom contained in the hydrophobic moiety. Specific examples of the fluorine-based emulsifier include a fluorinated alkanoate and a fluorinated ether carboxylic acid compound.

In the case where the first fluorinated polymer is used, it is assumed that the specific monomer is polymerized in particles of the first fluorinated polymer as described above, thereby forming particles containing the first and second fluorinated polymers. In other words, in the case where the first fluorinated polymer is used in the present production method, it is considered that the second fluorinated polymer is obtained in the form of particles containing the first and second fluorinated polymers. In this case, the aqueous dispersion in which particles containing the first and second fluorinated polymers are dispersed in the aqueous medium is obtained by the present production method.

On the other hand, in the case where the first fluorinated polymer is not used, the aqueous dispersion in which particles containing the second fluorinated polymer are dispersed in the aqueous medium is obtained.

(By-products containing hydrophilic groups)

In the present production method, the generation of by-products containing hydrophilic groups is suppressed. As the hydrophilic groups, a hydroxyl group and an ionic functional group may be mentioned; and specific examples of the ionic functional group are the same as those as described above.

Specific example of such hydrophilic group-containing by-products are compounds represented by the formula (S1). The compounds represented by the formula (S1) are compounds specifically by-produced when a hydrophilic group-containing polymerization initiator (such as, for example, ammonium persulfate or disuccinic peroxide) and a fluorine-containing monomer (in particular, tetrafluoroethylene) are used for production of a fluorinated polymer. Accordingly, the present inventors have focused particularly on the compounds represented by the formula (S1) among the hydrophilic group-containing by-products. It can be said that the amount of generation of the hydrophilic group-containing by-products is reduced when the generation of the compounds represented by the formula (S1) is suppressed.

Formula (S1): $H\text{-}(CF_2)_{n1}\text{-}COOM$

In the formula (S1), M is a hydrogen atom, Na, K or $NH_4$ ; and n1 is 3 to 15 or 17.

[Aqueous dispersion]

An aqueous dispersion according to the present invention (hereinafter also referred to as the "present aqueous dispersion") contains an aqueous medium and a second fluorinated polymer and may further contain a first fluorinated polymer.

The present aqueous dispersion can be obtained by, for example, the above-described present production method.

<Aqueous medium>

The aqueous medium is the same as the specific examples of the aqueous medium used for production of the second fluorinated polymer as described above.

The content of the aqueous medium to the total mass of the present aqueous dispersion is preferably 50 to 99 mass%, more preferably 60 to 99 mass%, still more preferably 70 to 99 mass%, in view of the dispersion stability of particles containing the second fluorinated polymer.

<First and second fluorinated polymers>

The present aqueous dispersion may contain a first fluorinated polymer. The first fluorinated polymer is the same as the first fluorinated polymer used in the present production method as described above, preferable examples of which are the same as above.

In the case where the first fluorinated polymer is contained in the present aqueous dispersion, the content of the first fluorinated polymer to the total mass of the present aqueous dispersion is preferably 0.1 to 1.0 mass%, more preferably 0.15 to 0.80 mass%, still more preferably 0.20 to 0.70 mass%.

The second fluorinated polymer is the same as the second fluorinated polymer obtained by the present production method as described above, preferable examples of which are the same as above.

The content of the second fluorinated polymer to the total mass of the present aqueous dispersion is preferably 5 to 50 mass%, more preferably 8 to 40 mass%, still more preferably 10 to 35 mass%.

In the case where the first fluorinated polymer is contained in the present aqueous dispersion, the total content of the first and second fluorinated polymers to the total mass of the present aqueous dispersion is preferably 5 to 50 mass%, more preferably 8 to 40 mass%, still more preferably 10 to 35 mass%.

In the case where the first fluorinated polymer is contained in the present aqueous dispersion, the first and second fluorinated polymers may be present separately in the present aqueous dispersion, but are preferably present in the form of particles containing the first and second fluorinated polymers in the present aqueous dispersion.

In this case, the average particle size of the particles is preferably 500 μm or smaller, more preferably 450 μm or smaller, still more preferably 400 μm or smaller, in terms of dispersion stability.

Further, the average particle size of the particles is preferably 50 nm or larger, more preferably 80 nm or larger, still more preferably 100 nm or larger, in terms of agglomeration properties.

The average particle size of the particles refers to a particle size at a point where the cumulative volume is 50% on a cumulative curve obtained by measuring the particle size distribution of the particles by the laser diffraction/scattering method and taking the total volume of the group of the particles as 100%.

<Others>

The present aqueous dispersion may contain a hydrocarbon-containing surfactant described above.

The hydrocarbon-containing surfactant may be at least one type selected from the group consisting of an anionic hydrocarbon surfactant and a nonionic hydrocarbon surfactant, specific examples and preferable embodiments of which are the same as those described above.

In the case where the hydrocarbon-containing surfactant is contained in the present aqueous dispersion, the content of the hydrocarbon-containing surfactant to the total mass of the present aqueous dispersion is preferably 0.00001 to 10 mass%, more preferably 0.0001 to 1 mass%.

It is preferable that the present aqueous dispersion contains substantially no compound represented by the above formula (S1).

In the present aqueous dispersion, substantially no compound represented by the formula (S1) means that the content of compounds represented by the formula (S1) to the total mass of the fluorinated polymer in the present aqueous dispersion is, for example, 10000 mass ppb or less. The content of the compounds represented by the formula (S1) may be less than 1000 mass ppb, may be 100 mass ppb or less, or may be 10 mass ppb or less. The lower limit of the content of the compounds represented by the formula (S1) is not particularly limited, and may be 0 mass ppb, 0.1 mass ppb, or 1 mass ppb.

It is herein noted that: in the case where the first and second fluorinated polymers are contained as the fluorinated polymer in the present aqueous dispersion, the total mass of the fluorinated polymer in the present aqueous dispersion refers to the total mass of the first and second fluorinated polymers; and in the case where only the second fluorinated polymer is contained as the fluorinated polymer in the present aqueous dispersion, the total mass of the fluorinated polymer in the present aqueous dispersion refers to the mass of only the second fluorinated polymer.

The content of the compounds represented by the formula (S1) to the total mass of the fluorinated polymer in the present aqueous dispersion can be measured by the method described later in Examples.

<Preferable embodiment of present aqueous dispersion>

A preferable embodiment of the present aqueous dispersion is an aqueous dispersion (hereinafter also referred to as an "aqueous dispersion A") containing the aqueous medium and the second fluorinated polymer, wherein the second fluorinated polymer is a PTFE having, at a terminal end of its molecular chain, a group represented by the following formula (Y).

$$R^1\text{-}(O)_n\text{-} \qquad (Y)$$

In the formula (Y), $R^1$ is a $C_{1-4}$ alkyl group; and n is 0 or 1.

The group represented by the formula (Y) is a group derived from the polymerization initiator X. Since the polymerization initiator X is used in the present production method, the group represented by the formula (Y), which is derived from the polymerization initiator X, is readily introduced to a terminal end of the molecular chain of the second fluorinated polymer. In particular, when only TFE is used as the specific monomer, the group represented by the formula (Y) is readily introduced to a terminal end of the molecular chain of the obtainable PTFE.

The alkyl group as $R^1$ in the formula (Y) may be linear or branched, and is preferably branched.

The carbon number of the alkyl group as $R^1$ is 1 to 4, and is preferably 2 to 4, more preferably 3 or 4, still more preferably 4.

The alkyl group as $R^1$ is preferably a methyl group, a propyl group or a butyl group. With a view to ensuring high polymerization reactivity during the production process, this alkyl group is more preferably a methyl group, an iso-propyl group or a tert-butyl group, still more preferably a tert-butyl group.

The content of the second fluorinated polymer in the aqueous dispersion A is the same as that of the second fluorinated polymer in the present aqueous dispersion.

Specific examples and the content of the aqueous medium in the aqueous dispersion A are the same as those of the aqueous medium in the present aqueous dispersion.

The aqueous dispersion A may contain a hydrocarbon-containing surfactant. The hydrocarbon-containing surfactant may be at least one type selected from the group consisting of an anionic hydrocarbon surfactant and a nonionic hydrocarbon surfactant.

Specific examples and the content of the hydrocarbon-containing surfactant are the same as those of the hydrocarbon-containing surfactant in the present aqueous dispersion.

The aqueous dispersion A may further contain a first fluorinated polymer as described above. Specific examples and the content of the first fluorinated polymer are the same as those of the first fluorinated polymer in the present aqueous dispersion.

<Applications>

The present aqueous dispersion is easily processed by solvent replacement to an organic solvent dispersion using e.g. N-methylpyrrolidone, acetone or the like.

For example, the organic solvent dispersion can be obtained by mixing the present aqueous dispersion with an organic solvent and removing water from the resulting mixed dispersion by evaporation or by the use of anhydrous sodium sulfate or the like.

In the present aqueous dispersion, the fluorinated polymer is stably dispersed. Therefore, the present aqueous dispersion is suitable for use in coatings, binders and the like.

In the case where the first fluorinated polymer is contained in the present aqueous dispersion, a powder of the first and second fluorinated polymers can be obtained by agglomeration of the first and second fluorinated polymers (preferably, particles containing the first and second fluorinated polymers) from the present aqueous dispersion.

In the case where the first fluorinated polymer is not contained in the present aqueous dispersion, a powder of the second fluorinated polymer can be obtained by agglomeration of the second fluorinated polymer (preferably, particles containing the second fluorinated polymer) from the present aqueous dispersion.

As specific examples of the agglomeration method, mechanical agglomeration, freeze agglomeration, acid polymerization, base agglomeration and agglomeration using a coagulant may be mentioned.

An example of mechanical agglomeration is a method of diluting the present aqueous dispersion with water such that the concentration of the first and second fluorinated polymers in the aqueous dispersion is adjusted to 8 to 20 mass%, and then, agglomerating primary particles of the first and second fluorinated polymers with the application of shear force by vigorous stirring or the like. As necessary, the pH of the aqueous dispersion may be adjusted, and an agglomeration aid such as an electrolyte or a water-soluble organic solvent may be added. As examples of the pH adjuster, sodium carbonate and sodium hydrogen carbonate may be mentioned. The pH adjustment may be conducted in the presence of at least one type of compound selected from the group consisting of ammonia, an ammonium salt and urea. As examples of the electrolyte, inorganic salts such as potassium nitrate, sodium nitrate, sodium carbonate and sodium hydrogen carbonate may be mentioned. As examples of the organic solvents, alcohols and acetone may be mentioned.

In the case of freeze agglomeration, the agglomeration temperature is preferably - 20 to 0°C; and the agglomeration time is preferably 1 hour or more, more preferably 2 hours or more.

In the case of acid agglomeration, preferred is a method of adding an acid-containing solution to the present aqueous dispersion. The acid to be added may be hydrochloric acid, nitric acid, sulfuric acid, oxalic acid, hydrofluoric acid or the like, and is preferably hydrochloric acid. The acid concentration in the acid-containing solution is preferably 0.1 to 50 mass%, more preferably 1 to 30 mass%, still more preferably 1 to 10 mass%.

In the case of base agglomeration, preferred is a method of adding a base-containing solution to the present aqueous dispersion. The base to be added may be sodium hydroxide, potassium hydroxide, ammonium carbonate or the like, and is preferably sodium hydroxide. The base concentration in the base-containing solution is preferably 0.1 to 50 mass%, more preferably 1 to 30 mass%, still more preferably 1 to 10 mass%.

For agglomeration by a coagulant, a known coagulant may be used. Specific examples of the coagulant include an aluminum salt, a calcium salt or a magnesium salt. Preferred is aluminum sulfate, an alum represented by the general formula $M'Al(SO_4)_2 \cdot 12H_2O$ (wherein M' is a monovalent cation other than lithium), calcium nitrate or magnesium sulfate. An alum is more preferred. Still more preferred is potassium alum wherein M is potassium.

As the agglomeration method, mechanical agglomeration or base agglomeration is preferred whereby agglomeration is particularly likely to proceed.

[Solid composition]

A solid composition according to the present invention (hereinafter also referred to as the "present solid composition") contains a second fluorinated polymer and may further contain a first fluorinated polymer.

In the present specification, the solid composition refers to a composition in which the solid mass concentration is 99 mass% or more.

The solid mass concentration is determined by the following method based on the mass measurement before and after heating.

After 2.0 g of the solid composition is heated at 170°C for 20 minutes, the mass of the resulting residue is measured. Then, the solid mass concentration is calculated according to the following formula.

Solid mass concentration (mass%) = 100 × (mass of residue)/(mass of solid composition)

The present solid composition is preferably obtained by performing agglomeration on the present aqueous

dispersion in the above-described manner. Since preferable embodiments of the present solid composition are similar to preferable embodiments of the second fluorinated polymer contained in the present aqueous dispersion and the first fluorinated polymer used as necessary in the present aqueous dispersion as described above, detailed description thereof will be omitted.

In the case where the first fluorinated polymer is contained in the present solid composition, the first and second fluorinated polymers may be present separately in the present solid composition, but are preferably present in the form of particles containing the first and the second fluorinated polymers.

In the case where the first fluorinated polymer is contained in the present solid composition, the content of the first fluorinated polymer is preferably 0.10 to 5 mass%, more preferably 0.2 to 4 mass%, still more preferably 0.3 to 3 mass%, to the total mass of the present solid composition.

The content of the second fluorinated polymer is preferably 95 to 100 mass%, more preferably 96 to 100 mass%, still more preferably 97 to 100 mass%, to the total mass of the present solid composition.

In the case where the first fluorinated polymer is contained in the present solid composition, the total content of the first and second fluorinated polymers is preferably 98 to 100 mass%, more preferably 99 to 100 mass%, to the total mass of the present solid composition.

The present solid composition may contain a hydrocarbon-containing surfactant described above.

The hydrocarbon-containing surfactant may be at least one type selected from the group consisting of an anionic hydrocarbon surfactant and a nonionic hydrocarbon surfactant, specific examples and preferable embodiments of which are the same as those described above.

In the case where the hydrocarbon-containing surfactant is contained in the present solid composition, the content of the hydrocarbon-containing surfactant to the total mass of the present solid composition is preferably 0.000001 to 5 mass%, more preferably 0.000001 to 1 mass%.

It is preferable that the present solid composition contains substantially no compound represented by the above formula (S1).

In the present solid composition, substantially no compound represented by the formula (S1) means that the content of compounds represented by the formula (S1) to the total mass of the fluorinated polymer in the present solid composition is, for example, 10 mass ppb or less. The content of the compounds represented by the formula (S1) may be less than 10 mass ppb, may be 5 mass ppb or less, or may be 1 mass ppb or less. The lower limit of the content of the compounds represented by the formula (S1) is not particularly limited, and may be 0 mass ppb, 0.1 mass ppb or 1 mass ppb.

It is herein noted that: in the case where the first and second fluorinated polymers are contained as the fluorinated polymer in the present solid composition, the total mass of the fluorinated polymer in the present solid composition refers to the total mass of the first and second fluorinated polymers; and in the case where only the second fluorinated polymer is contained as the fluorinated polymer in the present solid composition, the total mass of the fluorinated polymer in the present solid composition refers to the mass of only the second fluorinated polymer.

The content of the compounds represented by the formula (S1) to the total mass of the fluorinated polymer in the present solid composition can be measured by the method described later in Examples.

<Preferable embodiment of present solid composition>

A preferable embodiment of the present solid composition is a composition (hereinafter also referred to as a "solid composition A") containing the second fluorinated polymer, wherein the second fluorinated polymer is a PTFE having, at a terminal end of its molecular chain, a group represented by the above-described formula (Y).

The content of the second fluorinated polymer in the solid composition A is the same as that of the second fluorinated polymer in the present solid composition.

The solid composition A may contain a hydrocarbon-containing surfactant. The hydrocarbon-containing surfactant may be at least one type selected from the group consisting of an anionic hydrocarbon surfactant and a nonionic hydrocarbon surfactant.

Specific examples and the content of the hydrocarbon-containing surfactant are the same as those of the hydrocarbon-containing surfactant in the present solid composition.

The solid composition A may further contain a first fluorinated polymer as described above. Specific examples and the content of the first fluorinated polymer are the same as those of the first fluorinated polymer in the present solid composition.

The solid composition A is preferably obtained by performing agglomeration on the present aqueous dispersion (in particular, the aqueous dispersion A) in the above-described manner.

EXAMPLES

The present invention will be now described in further detail with reference to Examples. Here, Ex. 1 to 3 correspond to Examples of the present invention; and Ex. 4 to 6 correspond to Comparative Examples. It should however be understood that the present invention is by no means restricted to these Examples.

[Measurement and evaluation methods]

Measurements and evaluations were carried out by the following methods.

<Average particle size of particles in dispersion>

The average particle size (D50) of particles in an aqueous dispersion obtained in each Ex. was measured with a laser diffraction/scattering type particle size distribution analyzer (ELSZ manufactured by Otsuka Electronics Co., Ltd.).

<Proportion of each type of units in polymer>

The proportion of each type of units in a polymer was determined by $^{19}$F-NMR analysis and infrared spectroscopy analysis.

<Melting point and crystallization energy>

The melting point and crystallization energy were measured with DSC8500 manufactured by Perkin Elmer.

More specifically, 10 mg of a measurement sample was put in an aluminum sample pan, heated to 200°C at a heating rate of 10°C/min in an air atmosphere and held for 1 minute. After that, the sample was heated to 380°C at a heating rate of 10°C/min, held at 380°C for 1 minute, and then, cooled to 200°C at 10°C/min.

A peat top temperature observed due to thermal melting of the sample during the process of heating from 200°C to 380°C was taken as the melting point; and the crystallization energy was calculated from a peak area observed during the process of cooling from 380°C to 200°C. The smaller the absolute value of the crystallization energy, the higher the molecular weight.

<Contents M1 and M2>

The content (hereinafter also referred to as "content M1") of compounds represented by the above formula (S1) to the total mass of a fluorinated polymer in an aqueous dispersion obtained in each Ex. and the content (hereinafter also referred to as "content M2") of compounds represented by the above formula (S1) to the total mass of a solid composition obtained in each Ex. were measured by the following procedure using a liquid chromatography-mass spectrometer.

(Preparation of measurement sample)

To 1 mL of an aqueous dispersion, 5 mL of methanol was added. The resulting mixture was stirred, and subjected to centrifugation (8000 rpm, 10 minutes) to settle a fluorinated polymer and extract a clarified liquid. The thus-obtained extract was used as an extract M1 for measurement of the content M1.

Further, 5 mL of methanol was added to 2.5 g of a solid composition obtained in each Ex. The resulting mixture was subjected to ultrasonic treatment at 50°C for 2 hours, and further subjected to centrifugation (5000 rpm, 5 minutes) to settle a fluorinated polymer and extract a clarified liquid. This extract was diluted with water or methanol as needed. The thus-obtained extract was used as an extract M2 for measurement of the content M2.

(Measurement procedure)

The content of a compound represented by the formula (S1) in the extract M1 or in the extract M2 was determined in terms of perfluorocarboxylic acid having the same number of carbon atoms in the case of $n = 3$ to 13, 15 and 17, and determined in terms of perfluorooctanoic acid in the case of $n = 14$.

More specifically, five methanol standard solutions of perfluorocarboxylic acid having known concentrations of from 1 to 180 ng/g were prepared and measured.

Using first order approximation, the value a was determined by the following formula (A1) from the respective sample concentrations and the peak integral values.

$$A = a \times X \quad (A1)$$

A: Peak area of perfluorocarboxylic acid
X: Concentration (ng/g) of perfluorocarboxylic acid

Measurement conditions

The measurement device and measurement conditions were as shown in Table 1 below.

[Table 1]

| LC part | | |
|---|---|---|
| Device | CTO-40C manufactured by Shimadzu Corporation | |
| Column | Shim-pack Velox SP-C18 2.7 μm, 150 mm × 2.1 mm | |
| Mobile phases | A 20mM $CH_3COONH_4/H_2O$ | |
| | B $CH_3OH$ | |
| | 0→0.5min | A:B=80:20-A:B=75:25 Linear gradient |
| | 0.5→3.5min | A:B=75:25-A:B=70:30 Linear gradient |
| | 3.5→5.0min | A:B=70:30→A:B=40:60 Linear gradient |
| | 5.0→9.5min | A:B=40:60→A:B=20:80 Linear gradient |
| | 9.5→10.0min | A:B=20:80→A:B=2:98 Linear gradient |
| | 10.0→20.0min | A:B=2:98 |
| | 20.0→20.1 min | A:B=2.0:98.0→A:B=80:20 Linear gradient |
| | 20.1→25.0min | A:B=80:20 |
| Flow rate | 0.25 mL/min | |
| Column temperature | 40°C | |
| Sample injection amount | 2 μL | |
| MS part | | |
| Device | LCMS-8060NX manufactured by Shimadzu Corporation | |
| Measurement mode | MRM (Multiple reaction monitoring) ESI (Electrospray ionization) | |
| Ionization method | Negative mode | |

MRM measurement parameters

The MRM measurement parameters were as shown in Table 2 below.

[Table 2]

| Compound | Carbon number | Precursor | Product |
|---|---|---|---|
| Perfluorobutanoic acid | 4 | 213 | 169 |
| Perfluoropentanoic acid | 5 | 263 | 219 |
| Perfluorohexanoic acid | 6 | 313 | 269 |
| Perfluoroheptanoic acid | 7 | 363 | 319 |
| Perfluorooctanoic acid | 8 | 413 | 369 |
| Perfluorononanoic acid | 9 | 463 | 419 |
| Perfluorodecanoic acid | 10 | 513 | 469 |
| Perfluoroundecanoic acid | 11 | 563 | 519 |
| Perfluorododecanoic acid | 12 | 613 | 569 |
| Perfluorotridecanoic acid | 13 | 663 | 619 |
| Perfluorotetradecanoic acid | 14 | 713 | 669 |

(continued)

| Compound | Carbon number | Precursor | Product |
|---|---|---|---|
| Perfluorohexadecanoic acid | 16 | 813 | 769 |
| Perfluorooctadecanoic acid | 18 | 913 | 869 |

Using the liquid chromatography-mass spectrometer, the compounds represented by the formula (S1) in the extract were measured. The peak area of the compound represented by the formula (S1) with each carbon number in the extract was determined by the MRM method.

MRM measurement parameters

MRM measurement parameters were as shown in Table 3 below.

[Table 3]

| Type of compound represented by formula (S1) (Value n1 in formula (S1)) | Carbon number | Precursor | Product |
|---|---|---|---|
| 3 | 4 | 195 | 131 |
| 4 | 5 | 245 | 181 |
| 5 | 6 | 295 | 231 |
| 6 | 7 | 345 | 281 |
| 7 | 8 | 395 | 331 |
| 8 | 9 | 445 | 381 |
| 9 | 10 | 495 | 431 |
| 10 | 11 | 545 | 481 |
| 11 | 12 | 595 | 531 |
| 12 | 13 | 645 | 581 |
| 13 | 14 | 695 | 631 |
| 14 | 15 | 745 | 681 |
| 15 | 16 | 795 | 731 |
| 17 | 18 | 895 | 831 |

Subsequently, the content of the compound having (n1+1) carbon atoms in the extract (extract M1 or extract M2) was calculated using the following formula (A2). Here, the value a determined by the above formula (A1) was used as the value a in the formula (A2).

$$XCm = ACm/a \times \rho 1/\rho 2 \quad (A2)$$

XCm: Content (ng/g) of compound having (n1+1) carbon atoms in extract
ACm: Peak area of compound having (n1+1) carbon atoms in extract
$\rho 1$: Density of methanol
$\rho 2$: Density of extract

In this measurement, the quantification limit was 1 ng/g.

The content (YCm) of each compound to the content of the fluorinated polymer in the aqueous dispersion was determined by the following formula (A3) based on the calculated value XCm of each compound in the extract M1.

$$YCm = XCm \times \text{Dilution ratio} \times W1a/(W1b \times c) \quad (A3)$$

YCm: Content (ng/g) of compound having (n1+1) carbon atoms (relative to fluorinated polymer) in aqueous dispersion

W1a: Mass (g) of extract M1
W1b: Mass (g) of aqueous dispersion used for sample preparation of extract M1
c: Solid concentration in aqueous dispersion used for sample preparation of extract M1

Here, the dilution ratio refers to a mass ratio for dilution of the extract with water or methanol to XCm of 180 ng/g or lower.

The sum of the values YCm of the respective compounds was taken as the content M1.

Further, the content (ZCm) of each compound to the content of the fluorinated polymer in the solid composition was determined by the following formula (A4) based on the calculated value XCm of each compound in the extract M2.

$$ZCm = XCm \times \text{Dilution ratio} \times W2a/W2b \qquad (A4)$$

ZCm: Content (relative to fluorinated polymer) of compound having (n1+1) carbon atoms in powder.
W2a: Mass (g) of extract M2
W2b: Mass (g) of dry powder used for sample preparation of extract M2

Here, the dilution ratio refers to a mass ratio for dilution of the extract with water or methanol to XCm of 180 ng/g or lower.

The sum of the values ZCm of the respective compounds was taken as the content M2.

<Detection of terminal end structure)

The terminal end structure of a fluorinated polymer in a solid composition was detected by pyrolysis GC-TOF/MS. More specifically, the fluorinated polymer was pyrolyzed at a pyrolysis temperature of 600°C and an interface temperature of 320°C with the use of a pyrolyzer (EGA/Py-3030D manufactured by Fronteir Lab Ltd.), and then, analyzed by GC-TOF/MS. The detailed analysis conditions were as shown in Table 4 below.

[Table 4]

| GC part | |
|---|---|
| Device | 7890B GC System manufactured by Agilent Technologies |
| Column | DB-5 |
| Flow rate | 1 mL/min |
| Oven temperature | -30°C×10min → 320°C(5°C/min)×10min |
| MS part | |
| Device | JMS-T200GC, manufactured by JEOL Ltd. |
| Ionization method | EI (electron ionization) method |
| Detector | 2100V |
| m/z | 29 to 800 |

[Production of raw material liquid A]

In a 60.5-L stainless steel pressure-resistant reactor, ultrapure water (33 kg) and PMVE (2.1 kg) were charged and heated to 90°C while stirring. Then, TFE (210 g) and an aqueous ammonium persulfate solution (5.6 mass%, 150 g) were charged into the reactor to start polymerization. Since the pressure inside the reactor decreased with the start of the polymerization, TFE was added into the reactor such that the pressure was kept constant. At the time when 120 g of TFE was added, the reactor was cooled to stop the polymerization reaction. After gas remaining in the reactor was collected, the contents of the reactor were heated to 90°C and stirred for 3 hours at 20 rpm. The reactor was cooled, and then, the resulting liquid was taken out. This liquid was used as a raw material liquid A.

[Production of raw material liquid B]

To the above-obtained raw material liquid A (490g), Dowex Monosphere 650C (cation exchange resin manufactured by DuPont, 20 g) was added. After 60 minutes of stirring, the resulting raw material liquid was filtered to separate the ion exchange resin from the raw material liquid. To the filtered raw material liquid, Purolite A300 (anion exchange resin

manufacture by Purolite, 20 g) was added. After 60 minutes of stirring, the raw material liquid was filtered to separate the ion exchange resin from the raw material liquid. The thus-obtained raw material liquid was used as a raw material liquid B.

The raw material liquid B had particles of fluorinated polymer 1A dispersed in the aqueous medium. The content of the fluorinated polymer 1A was 0.5 mass% to the total mass of the raw material liquid B.

The raw material liquid B was subjected to freeze agglomeration and filtration. The thus-obtained fluorinated polymer 1A was washed with ultrapure water and dried under vacuum at 100°C. The fluorinated polymer 1A was analyzed by NMR and found to have a proportion of PMVE units/TFE units = 54/46 (molar ratio).

[Ex. 1]

In a 1.3-L stainless steel pressure-resistant reactor, a paraffin wax (36 g), ultrapure water (157 g), the raw material liquid B (617 g) and a PBPV solution (4 mass%, 2.6 g) were charged to obtain an aqueous dispersion B. The reactor was heated to 65°C, and the aqueous dispersion B was stirred. TFE was injected into the reactor until the pressure inside the reactor reached 1.4 MPaG, to start polymerization. Since the pressure inside the reactor decreased with the start of the polymerization, TFE was added into the reactor such that the pressure was kept constant. At the time when 8 g of TFE was added, an aqueous sodium lauryl sulfate solution (0.02 mass%, 5 mL) was added. The aqueous sodium lauryl sulfate solution (0.02 mass%, 5 mL) was continuously added per 19 g of TFE subsequently added. At the time when 162 g of TFE was injected, the reactor was cooled to stop the polymerization reaction.

After gas remaining in the reactor was collected, the resulting liquid was taken out. This liquid was used as an aqueous dispersion 1. The aqueous dispersion 1 was a dispersion of particles (average particle size: 210 nm) containing fluorinated polymers 1A and 2A in the aqueous medium, and the solid concentration in the aqueous dispersion 1 was 18 mass%.

The particles in the aqueous dispersion 1 were agglomerated and filtered out, thereby obtaining a solid composition containing PTFE. The PTFE was dried at 120°C. The melting point of the PTFE was 338°C; and the crystallization energy of the PTFE was -22 J/g. When the solid composition was analyzed according to the method described in the section of <Detection of terminal end structure>, it was confirmed from the fragment peak analysis result that the PTFE had tert-butyl groups at terminal ends of molecular chains.

[Ex. 2]

In a 1.3-L stainless steel pressure-resistant reactor, a paraffin was (36 g), ultrapure water (157 g), the raw material liquid B (617 g), a PBPV solution (4 mass%, 2.6 g) and an aqueous sodium lauryl sulfate solution (0.02 mass%, 40 mL) were charged to obtain an aqueous dispersion C. The reactor was heated to 65°C, and the aqueous dispersion C was stirred. TFE was injected into the reactor until the pressure inside the reactor reached 1.4 MPaG, to start polymerization. Since the pressure inside the reactor decreased with the start of the polymerization, TFE was added such that the pressure was kept constant. At the time when 162 g of TFE was injected, the reactor was cooled to stop the polymerization reaction.

After gas remaining in the reactor was collected, the resulting liquid was taken out. This liquid was used as an aqueous dispersion 2. The aqueous dispersion 2 was a dispersion of particles (average particle size: 210 nm) containing fluorinated polymers A1 and A2 in the aqueous dispersion, and the solid concentration in the aqueous dispersion 2 was 18 mass%.

The particles in the aqueous dispersion 2 were agglomerated and filtered out, thereby obtaining a solid composition containing PTFE. The PTFE was dried at 120°C. The melting point of the PTFE was 338°C; and the crystallization energy of the obtained PTFE was -22 J/g. When the solid composition was analyzed according to the method described above in the section of <Detection of terminal end structure>, it was confirmed from the fragment peak analysis result that the PTFE had tert-butyl groups at terminal ends of molecular chains.

[Ex. 3]

In a 1.3-L stainless steel pressure-resistant reactor, a paraffin wax (36 g), ultrapure water (764 g), a PBPV solution (4 mass%, 13 g) and an aqueous sodium lauryl sulfate solution (0.1 mass%, 5 mL) were charged to obtain an aqueous dispersion D. When 8 g of TFE was added into the reactor, the aqueous sodium lauryl sulfate solution (0.1 mass%, 5 mL) was added into the reactor. The aqueous sodium lauryl sulfate solution (0.1 mass%, 5 mL) was added continuously per subsequent addition of 19 g of TFE. The reactor was heated to 65°C, and the aqueous dispersion D was stirred. TFE was injected until the pressure inside the reactor reached 1.4 MPaG, to start polymerization. Since the pressure inside the reactor decreased with the start of the polymerization, TFE was added into the reactor such that the pressure was kept constant. At the time when 162 g of TFE was injected, the reactor was cooled to stop the polymerization reaction.

After gas remaining in the reactor was collected, the resulting liquid was taken out. This liquid was used as an

aqueous dispersion 3. The aqueous dispersion 3 was a dispersion of particles containing fluorinated polymer 2A in the aqueous medium, and the solid concentration in the aqueous dispersion 3 was 18 mass%.

The particles in the aqueous dispersion 3 were agglomerated and filtered out, thereby obtaining a solid composition containing PTFE. The PTFE was dried at 120°C. The melting point of the PTFE was 334°C; and the crystallization energy of the PTFE was -26 J/g. When the solid composition was analyzed by the method described above in the section of <Detection of terminal end structure>, it was confirmed from the fragment peak analysis result that the PTFE had tert-butyl groups at terminal ends of molecular chains.

[Ex. 4]

In a 1.3-L stainless steel pressure-resistant reactor, a paraffin wax (36 g), ultrapure water (157 g), the raw material liquid B (617 g) and an aqueous ammonium persulfate solution (1 mass%, 1.5 g) were charged to obtain an aqueous dispersion E. The reactor was heated to 65°C, and the aqueous dispersion E was stirred. TFE was injected into the reactor until the pressure inside the reactor reached 1.4 MPaG, to start polymerization. Since the pressure inside the reactor decreased with the start of the polymerization, TFE was added into the reactor such that the pressure was kept constant. At the time when 8 g of TFE was added, an aqueous sodium lauryl sulfate solution (0.02 mass%, 5 mL) was added into the reactor. The aqueous sodium lauryl sulfate solution (0.02 mass%, 5 mL) was continuously added per 19 g of TFE subsequently added. At the time when 162 g of TFE was injected, the reaction was cooled to stop the polymerization reaction.

After gas remaining in the reactor was collected, the resulting liquid was taken out. This liquid was used as an aqueous dispersion 4. The aqueous dispersion 4 was a dispersion of particles (average particle size: 213 nm) containing fluorinated polymers 1A and 1B in the aqueous dispersion, and the solid concentration in the aqueous dispersion 4 was 18 mass%

The particles in the aqueous dispersion 4 were agglomerated and filtered out, thereby obtaining a solid composition containing PTFE. The PTFE was dried at 120°C. The melting point of the PTFE was 338°C; and the crystallization energy of the PTFE was -20 J/g.

[Ex. 5]

In a 1.3-L stainless steel pressure-resistant reactor, a paraffin wax (36 g), ultrapure water (157 g), the raw material liquid B (617 g), an aqueous ammonium persulfate solution (1 mass%, 1.5 g) and an aqueous sodium lauryl sulfate solution (0.02 mass%, 40 mL) were charged to obtain an aqueous dispersion F. The reactor was heated to 65°C, and the aqueous dispersion F was stirred. TFE was injected into the reactor until the pressure inside the reactor reached 1.4 MPaG, to start polymerization. Since the pressure inside the reactor decreased with the start of the polymerization, TFE was added into the reactor such that the pressure was kept constant. At the time when 162 g of TFE was injected, the reactor was cooled to stop the polymerization reaction.

After gas remaining in the reactor was collected, the resulting liquid was taken out. This liquid was used as an aqueous dispersion 5. The aqueous dispersion 5 was a dispersion of particles (average particle size: 213 nm) containing fluorinated polymers 1A and 2A in the aqueous medium, and the solid concentration in the aqueous dispersion 5 was 18 mass%.

The particles in the aqueous dispersion 5 were agglomerated and filtered out, thereby obtaining a solid composition containing PTFE. The PTFE was dried at 120°C. The melting point of the PTFE was 338°C; and the crystallization energy of the PTFE was -20 J/g.

[Ex. 6]

In a 1.3-L stainless steel pressure-resistant reactor, a paraffin wax (36 g), ultrapure water (768 g), an aqueous ammonium persulfate solution (1 mass%, 7.5 g) and an aqueous sodium lauryl sulfate solution (0.1 mass%, 5 mL) were charged to obtain an aqueous dispersion G. When 8 g of TFE was added into the reactor, the aqueous sodium lauryl sulfate solution (0.1 mass%, 5 mL) were added into the reactor. The aqueous sodium lauryl sulfate solution (0.1 mass%, 5 mL) was continuously added per 19 g of TFE subsequently added. The reactor was heated to 65°C, and the aqueous dispersion G was stirred. TFE was injected into the reactor until the pressure inside the reactor reached 1.4 MPaG, to start polymerization. Since the pressure inside the reactor decreased with the start of the polymerization, TFE was added into the reactor such that the pressure was kept constant. At the time when 162 g of TFE was injected, the reactor was cooled to stop the polymerization reaction.

After gas remaining the reactor was collected, the resulting liquid was taken out. This liquid was used as an aqueous dispersion 6. The aqueous dispersion 6 was a dispersion of particles containing fluorinated polymer 2A in the aqueous medium, and the solid concentration in the aqueous dispersion 6 was 18 mass%.

The particles in the aqueous dispersion 6 was agglomerated and filtered out, thereby obtaining a solid composition containing PTFE. The PTFE was dried at 120°C. The melting point of the PTFE was 334°C; and the crystallization energy of the PTFE was -26 J/g.

[Table 5]

| | | Ex. 1 | Ex. 2 | Ex. 3 | Ex. 4 | Ex. 5 | Ex. 6 |
|---|---|---|---|---|---|---|---|
| Initiator | | PBPV | PBPV | PBPV | APS | APS | APS |
| Raw material liquid B | | Used | Used | Not used | Used | Used | Not used |
| Timing of addition of surfactant | | Continuous | Initial | Initial/ Continuous | Continuous | Initial | Initial/ Continuous |
| Solid concentration in aqueous dispersion | mass% | 18 | 18 | 18 | 18 | 18 | 18 |
| Melting point of PTFE | °C | 338 | 338 | 334 | 338 | 338 | 334 |
| Content M 1 | mass ppb | Below 1000 | Below 1000 | Below 1000 | Over 20,000 | Over 20,000 | Over 20,000 |
| Content M2 | mass ppb | Below 10 | Below 10 | Below 10 | Over 10 | Over 10 | Over 10 |

As shown in Table 5, it has been confirmed that the present production method suppresses generation of hydrophilic group-containing by-products (compounds represented by the formula (S1)) (see Ex. 1 to Ex. 3).

The entire disclosure of Japanese Patent Application No. 2023-181599 filed on October 23, 2023, including specification, claims and summary, is incorporated herein by reference in its entirety.

## Claims

**1.** A method for producing a fluorinated polymer, comprising polymerizing a monomer including a fluorine-containing monomer with the use of a polymerization initiator X, in an aqueous dispersion containing a hydrocarbon-containing surfactant and an aqueous medium, to obtain a fluorinated polymer,
wherein the polymerization initiator X contains no hydrophilic group and has a molecular weight of 200 or less.

**2.** The method for producing a fluorinated polymer according to Claim 1, wherein the polymerization initiator X is a compound represented by the formula (X):

$$R^1\text{-CO-O-O-}R^2 \qquad (X)$$

where $R^1$ and $R^2$ are each independently a $C_{1-5}$ alkyl group.

**3.** The method for producing a fluorinated polymer according to Claim 1 or 2,
wherein the fluorine-containing monomer includes tetrafluoroethylene.

**4.** The method for producing a fluorinated polymer according to Claim 1 or 2,
wherein the hydrocarbon-containing surfactant includes at least one type selected from the group consisting of an anionic hydrocarbon surfactant and a nonionic hydrocarbon surfactant.

**5.** An aqueous dispersion comprising: a fluorinated polymer having, at a terminal end of a molecular chain thereof, a group represented by the formula (Y); and an aqueous medium,
wherein the fluorinated polymer is a polytetrafluoroethylene,

$$R^1\text{-(O)}_n\text{-} \qquad (Y)$$

where $R^1$ is a $C_{1-4}$ alkyl group; and n is 0 or 1.

6. The aqueous dispersion according to Claim 5, wherein $R^1$ in the formula (Y) is a tert-butyl group.

7. The aqueous dispersion according to Claim 5 or 6, further comprising a hydrocarbon-containing surfactant.

8. The aqueous dispersion according to Claim 7, wherein the hydrocarbon-containing surfactant includes at least one type selected from the group consisting of an anionic hydrocarbon surfactant and a nonionic hydrocarbon surfactant.

9. A solid composition comprising a fluorinated polymer having, at a terminal end of a molecular chain thereof, a group represented by the formula (Y),
wherein the fluorinated polymer is a polytetrafluoroethylene,

$$R^1\text{-}(O)_n\text{-} \qquad (Y)$$

where $R^1$ is a $C_{1-4}$ alkyl group; and n is 0 or 1.

10. The solid composition according to Claim 9, wherein $R^1$ in the formula (Y) is a tert-butyl group.

11. The solid composition according to Claim 9 or 10, further comprising a hydrocarbon-containing surfactant.

12. The solid composition according to Claim 11, wherein the hydrocarbon-containing surfactant includes at least one type selected from the group consisting of an anionic hydrocarbon surfactant and a nonionic hydrocarbon surfactant.

**INTERNATIONAL SEARCH REPORT**

International application No. **PCT/JP2024/037373**

**A. CLASSIFICATION OF SUBJECT MATTER**

***C08F 2/24***(2006.01)i; ***C08F 214/18***(2006.01)i
FI: C08F2/24 Z; C08F214/18

According to International Patent Classification (IPC) or to both national classification and IPC

**B. FIELDS SEARCHED**

Minimum documentation searched (classification system followed by classification symbols)

C08F2/24; C08F214/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 10-53623 A (CENTRAL GLASS CO., LTD.) 24 February 1998 (1998-02-24) claims, paragraph [0058], examples | 1-12 |
| Y | | 1-12 |
| X | JP 2009-13299 A (ASAHI GLASS COMPANY, LIMITED) 22 January 2009 (2009-01-22) claims, paragraph [0055], examples, in particular, synthesis example 3 | 1-12 |
| Y | | 1-12 |
| X | JP 2001-302732 A (KANTO DENKA KOGYO CO., LTD.) 31 October 2001 (2001-10-31) claims, paragraph [0031], examples | 5-6, 9-10 |
| Y | | 1-12 |

☐ Further documents are listed in the continuation of Box C.

☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 December 2024** | **17 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/037373**

| Patent document cited in search report | Publication date (day/month/year) | Patent family member(s) | Publication date (day/month/year) |
|---|---|---|---|
| JP 10-53623 A | 24 February 1998 | US 5880234 A<br>claims, column 11, line 38 to column 12, line 6, examples | |
| JP 2009-13299 A | 22 January 2009 | (Family: none) | |
| JP 2001-302732 A | 31 October 2001 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7236004 B
- JP 2016537499 A
- JP 2023181599 A